# EUROPÄISCHE PATENTANMELDUNG

(11) **EP 0 591 678 A1**
(43) Veröffentlichungstag der Anmeldung: **13.04.1994**
(21) Anmeldenummer: 93113864.8
(22) Anmeldetag: 31.08.1993
(51) Int. Cl.: A47L 15/42, B01J 49/00

(54) **Verfahren zur Wasserenthärtung und Einrichtung zur Durchführung des Verfahrens**

(30) Priorität: 24.09.1992 DE 4232009
(71) Anmelder: Bauknecht Hausgeräte GmbH, D-70565 Stuttgart (DE); WHIRLPOOL EUROPE B.V., NL-5507 SK Veldhoven (NL)
(72) Erfinder: Gumm, M., c/o Whirlpool Italia s.r.l., I-21025 Comerio (VA) (IT); Müller, K.-H., c/o Whirlpool Italia s.r.l., I-21025 Comerio (VA) (IT)
(74) Vertreter: Melio, Jan Dirk

(57) **Zusammenfassung**

Durch die Erfindung wird ein Verfahren zur Enthärtung von Frischwasser (24), insbesondere für Geschirrspülmaschinen, vorgeschlagen, wobei eine aus einem Salzbehälter (12) entnommene Salzlösung (12a) während des Regeneriervorganges einen mit Harz gefüllten, im Normalbetrieb vom Frischwasser (24) durchflossenen Harzbehälter (10) durchströmt und danach in einen Spülbehälter geleitet wird, wobei gemäß der Erfindung die Salzlösung (12a) den Harzbehälter (10) im Gegenstrom zum Frischwasser (24) durchströmt.

## Beschreibung

Die Erfindung bezieht sich auf ein Verfahren zur Enthartung von Frischwasser, insbesondere für Geschirrspülmaschinen, wobei eine aus einem Salzbehälter entnommene Salzlösung während des Regeneriervorgangaes einen mit Regenerierharz gefüllten, im Normalbetrieb vom Frischwasser durchflossenen Harzbehälter durchströmt und danach in einen Spülbehälter geleitet wird. Die Erfindung bezieht sich ferner auf eine Einrichtung zur Durchführung dieses Verfahrens.

Wasserenthärtungsanlagen auf der Basis eines Kationenaustauschers müssen nach jedem Enthärtungsvorgang wieder regeneriert werden. Dies geschieht im allgemeinen über einen Salzvorratsbehälter, der separat oder am Ionenaustauscher integriert ist und eine vorgegebene Menge Salzsole in das Enthärtungssystem abgibt. Bei der integrierten Bauweise ist der Harzbehälter in Verbindung mit dem Salzvorratsgefäß hergestellt. Um eine aufwendige Ventilsteuerung zu vermeiden, wird bei den bekannten, vorzugsweise im Haushalt verwendeten Geschirrspülern die Salzsole in der gleichen Richtung wie das zu enthärtende Wasser durch den Ionenaustauscher geführt. Die Regeneration findet also im Gleichstrom zur Enthärtung statt. Dies bedeutet, daß die Salzsole bei den bekannten Bauarten von unten aufsteigend durch das Harz geflutet wird. Bei diesem Enthärtungsvorgang des Frischwassers werden zunächst die unteren Schichten des Tauscherharzes mit Calcium- und Magnesiumionen beladen. Während des weiteren Betriebsablaufes schiebt sich die Beladungsgrenze immer weiter gegen das obere Ende des Kationenaustauscherbettes vor. Dann durchschlüpfende Calcium- und Magnesiumionen bilden die Resthärte im Weichwasser. Steigt diese Resthärte über einen spezifizierten Wert an, so muß die Anlage regeneriert werden. Bei der bekannten Regenerierung, bei der die Besalzung der Harze in gleicher Richtung wie das Durchströmen des Frischwassers erfolgt, gelangt die Regenerierlösung zunächst auf die unteren, stark beladenen Schichten. Die dort ausgetauschten Calcium- und Magnesiumionen müssen durch die wenig beladenen Schichten transportiert werden. Der Regeneriermittelüberschuß muß also sehr hoch sein, um auch die oberen Schichten mit wirksamer Regenerierlösung zu versorgen, um auch hier eine fast 100%ige Regeneration zu erreichen. Die bekannten Bauarten haben also den Nachteil, daß zu der sowieso notwendigen Übersalzung des Enthärters eine zusätzliche Menge an Salz benötigt wird, um das Harz allseitig und vollständig zu regenerieren.

Durch die DE-OS 29 47 483 ist eine insbesondere für Geschirrspülmaschinen verwendbare Enthärtungseinrichtung bekannt geworden. Diese Einrichtung enthält einen Harzbehälter, der über eine erste Zuleitung mit einem Frischwasseranschluß und über eine Ableitung mit einem Spülbehälter der Geschirrspülmaschine verbunden ist. Ferner ist ein Salzbehälter vorgesehen, der über eine zweite Zuleitung mit einer Dosierkammer für Frischwasser und über eine Soleleitung mit dem Harzbehälter, d.h. dem Ionenaustauscher, verbunden ist. Diese Bauart enthält sowohl in der Zuleitung des Salzbehälters als auch in der Soleleitung je ein Ventil. Diese Ventile werden nur während des Regeneriervorganges gleichzeitig geöffnet. Dabei fließt unter dem Einfluß der Schwerkraft das in der Dosierkammer gesammelte Wasser in den Salzbehälter. Aus dem Salzbehälter wird Sole über die Soleleitung in den Ionenaustauscher verdrängt. Durch die abgestimmte Wassermenge der Dosierkammer wird der Ionenaustauscher völlig mit Sole gefüllt. Nach einer ausreichenden Verweilzeit der Sole im Ionenaustauscher werden die Ventile vor dem Salzbehälter und in der Soleleitung geschlossen, während die Frischwasserzufuhr geöffnet wird. Damit fließt Frischwasser in den Ionenaustauscher und verdrängt die verbrauchte Sole in den Spülbehälter der Geschirrspülmaschine. Bei dieser Bauart treten die oben genannten Nachteile auf.

Der Erfindung liegt die Aufgabe zugrunde, unter Einsparung von Salz als umweltschonende Maßnahme die Enthärtungsleistung zu erhöhen.

Diese Aufgabe wird bei einem Verfahren der eingangs genannten Art dadurch gelöst, daS die Salzlösung den Harzbehälter (Ionenaustauscher) im Gegenstrom zum Frischwasser durchströmt. Bei dieser Gegenstrombesalzung des Kationentauschers kommt die frische Regenerierlösung zuerst mit den oberen Ionenaustauscherschichten im Harzbehälter in Berührung, ehe sie die stark beladenen Schichten nach unten erreicht. Bei gleicher Reinwasserqualität und Kapazität reicht ein erheblich geringerer Regeneriermittelüberschuß vollkommen aus.

In Ausgestaltung der Erfindung ist vorgesehen, daß bei einer senkrechten Anordnung des Harzbehälters das Frischwasser im Normalbetrieb den Harzbehälter von unten nach oben und die Salzlösung den Harzbehälter im Regenerierbetrieb von oben nach unten durchströmt. Dabei kann die Wirkung der Schwerkraft vorteilhaft ausgenutzt werden.

Zur Durchführung des erfindungsgemäßen Verfahrens dient eine Einrichtung, die einerseits einen Harzbehälter aufweist, der über eine erste Zuleitung mit einem Frischwasseranschluß und über eine Ableitung mit einem Spülbehälter verbindbar ist, und die andererseits einen Salzbehälter aufweist, der über eine Soleleitung mit dem Harzbehälter verbunden und über eine zweite Zuleitung mit einer Dosierkammer für Frischwasser verbindbar ist. Gemäß der Erfindung ist vorgesehen, daß die Frischwasser-Zuleitung für den Harzbehälter im unteren Endbereich und die Ableitung und Soleleitung im oberen Endbereich des Harzbehälters angeordnet sind und daß der Anschluß der Zu- und Ableitungen des Salz- und Harzbehälters derart über ein Mehrwegeventil erfolgt,
- daß im Betriebszustand "Enthärten" die Zuleitung des Salzbehälters geschlossen ist und das Frischwasser den Harzbehälter von unten nach oben durchströmt und
- daß im Betriebszustand "Regenerieren" die Zuleitung des Salzbehälters geöffnet ist und die aus der Soleleitung fließende Sole den Harzbehälter von oben nach unten durchströmt.

Im Betriebszustand "Enthärten" gelangt das Hartwasser durch eine entsprechende Schaltung des Mehrwegeventils zunächst in den Bodenbereich des Harzbehälters (d.h. des Ionentauschers), durchströmt den Ionentauscher und wird nach der Härteabgabe über die im oberen Endbereich des Harzbehälters angeordnete Ableitung wieder über das Mehrwegeventil und von dort in den Spülbehälter geleitet. In diesem Betriebszustand ist das Mehrwegeventil spannungslos. Für den Betriebszustand "Regenerieren" wird das Mehrwegeventil so aktiviert, daß die Zuleitung zum Salzbehätler geöffnet wird. Dabei fließt aus der zugehörigen Dosierkammer je nach Einstellung mehr oder weniger Wasser in den Salzbehälter und von dort als Sole über die Soleleitung von oben in den Ionentauscher. Die Salzsole durchströmt den Ionentauscher von oben nach unten, dabei wird das verdrängte Wasser aus dem Ionentauscher über einen geöffneten Weg des Mehrwegeventils in den Geschirrspüler geleitet. Nach Beendigung des Regeneriervorganges wird dann das Mehrwegeventil wieder abgeschaltet, und der nächste Enthärtungsvorgang kann beginnen.

Vorzugsweise ist das Mehrwegeventil gekennzeichnet durch drei jeweils mit Bohrungen versehene Eingangs- und Ausgangsstutzen zum Anschluß der Betriebsleitungen und durch einen verschiebbaren Ventilkolben, der mit zwei Senkrechtbohrungen und einer Schrägbohrung versehenen Ventilkolben, der je nach seiner Stellung verschiedene Betriebswege öffnet oder schließt. Diese Kolbenbohrungen sind derart angeordnet, daß die oben genannten Vorgänge bei einer Betätitgung des Mehrwegeventils durchführbar sind.

Dabei ist in Ausgestaltung der Erfindung vorgesehen,
a) daß der erste Eingangsstutzen des Mehrwegeventils mit dem Frischwasserzulauf und der gegenüberliegende Ausgangsstutzen mit der Zuleitung des Harzbehälters verbunden ist,
b) daß der zweite (mittlere) Eingangsstutzen mit dem Spülbehälter und der gegenüberliegende Ausgangsstutzen mit der Ableitung des Harzbehälters verbunden und
c) daß der dritte Eingangsstutzen mit einem Regenerier-Vorratsbehälter für Frischwasser und der gegenüberliegende Ausgangsstutzen mit der Zuleitung des Salzbehälters verbunden ist.

Wie ersichtlich, sind die Betriebsleitungen des Salz- und Harzbehälters mit fest zugeordneten Ausgangsstutzen des Mehrwegeventils verbunden, während die Frischwasserzuführung und die Verbindung zum Spülbehälter an den genannten Eingangsstutzen erfolgt. Die jeweilige Öffnung oder Schließung der entsprechenden Betriebswege erfolgt durch Verstellung des Ventilkolbens, wobei dessen Bohrungen mit den Bohrungen der Ein- und Ausgangsstutzen korrespondiert oder auch nicht.

Die Zuordnung der Bohrungen des Ventilkolbens zu den Bohrungen der Ein- und Ausgangsstutzen erfolgt in Ausgestaltung der Erfindung dadurch,
a) daß in der Betriebsstellung "Enthärten"
   - die Bohrungen der ersten Ein- und Ausgangsstutzen durch die Schrägbohrung des Ventilkolbens verbunden sind,
   - die Bohrungen der zweiten Ein- und Ausgangsstutzen durch eine Senkrechtbohrung des Ventilkolbens verbunden sind und
   - die Bohrungen der dritten Ein- und Ausgangsstutzen durch den Ventilkolben verschlossen sind,
b) daß in der Betriebsstellung "Regenerieren"
   - die Bohrungen des ersten Eingangsstutzens und des zweiten Ausgangsstutzens durch den Ventilkolben gesperrt sind
   - die Bohrungen des zweiten Eingangs- und des ersten Ausgangsstutzens durch die Schrägbohrung des Kolbens verbunden sind und
   - die Bohrungen des dritten Eingangs- und Ausgangsstutzens durch eine Senkrechtbohrung des Kolbens verbunden sind.

Dabei genügt eine einzige Verstellung des Ventilkolbens, um auf einfache und zuverlässige Weise die genannten Schaltfunktionen zu erhalten.

In der Zeichnung ist in den Fig. 1 bis 5 ein Ausführungsbeispiel des Gegenstandes gemäß der Erfindung schematisch dargestellt.
Fig. 1 zeigt eine Enthärtungseinrichtung mit einem Salzbehälter, einem Harzbehälter (Ionentauscher), einem Frischwasseranschluß und mit Anschlußteilen einer nicht näher dargestellten Geschirrspülmaschine,
Fig. 2 zeigt eine vergrößerte Darstellung der Enthärtungseinrichtung gemäß Fig. 1,
Fig. 3a, b zeigen in zwei Betriebsstellungen ein in der Enthärtungseinrichtung verwendetes Mehrwegeventil,
Fig. 4a, b zeigen eine schematische Darstellung des Regenerierens in einem Ionenaustauscherharz beim Stand der Technik und beim Gegenstand gemäß der Erfindung, und
Fig. 5 zeigt eine als Monoblock ausgebildete Enthärtungseinrichtung.

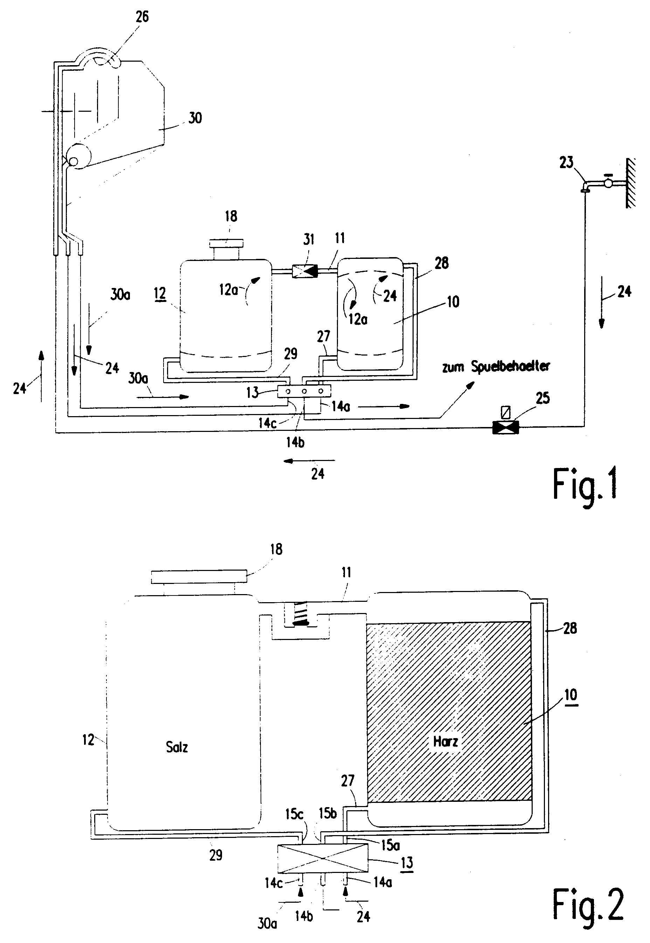

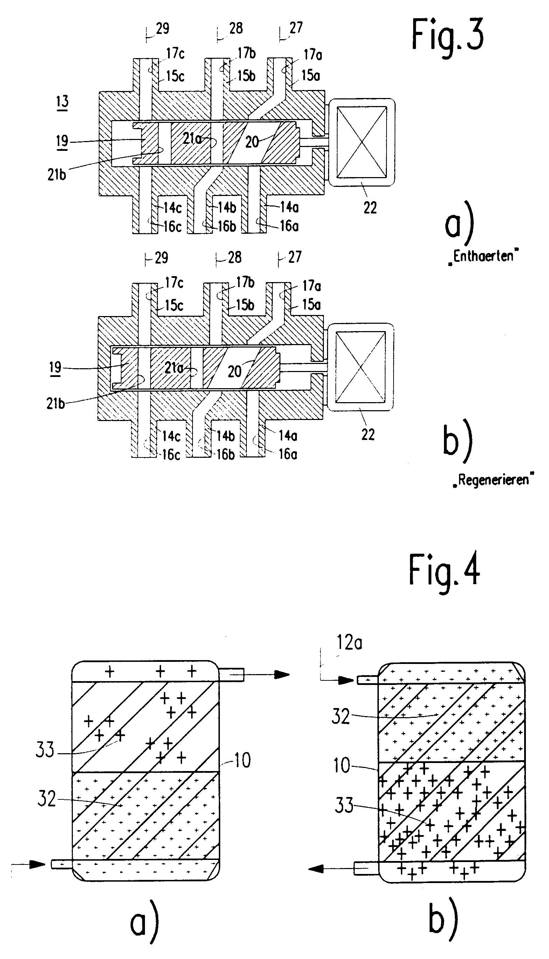

Die Enthärtungseinrichtung gemäß Fig. 1 und 2 enthält einen Ionenaustauscher 10 (Harzbehälter), der im oberen Bereich über eine Soleleitung 11 mit einem Salzbehälter 12 verbunden ist, der über einen Deckel 18 verschließbar ist. Mit 13 ist ein Mehrwegeventil bezeichnet, das drei Eingangsstutzen 14a, b, c und drei Ausgangsstutzen 15a, b, c besitzt. Die Eingangsstutzen sind mit Bohrungen 16a, b, c und die Ausgangsstutzen mit Bohrungen 17a, b, c versehen (Fig. 3). Das Mehrwegeventil besitzt einen Ventilkolben 19, der mit einer Schrägbohrung 20 und mit zwei Radialbohrungen 21a, b versehen ist und über einen Magneten 22 betätigt werden kann.

Im Betriebszustand "Enthärten" nimmt das Mehrwegeventil 13 die in Fig. 3a bezeichnete Stellung ein. Dabei gelangt das zu enthärtende Wasser von einem Hausanschluß 23 gemäß Pfeil 24 über ein Zulaufventil 25, eine freie Fließstrecke 26 zu dem Mehrwegeventil 13 und von dort über die Bohrungen 16a, 20, 17a über eine Zuleitung 27 in den unteren Bereich des Ionentauschers 10. Das Hartwasser 24 durchströmt den Ionentauscher 10 und wird nach der Härteabgabe über den im oberen Bereich des Ionentauschers angebrachten Ablauf 28 zu dem Eingangsstutzen 15b des Mehrwegeventils geführt und von dort über die Bohrungen 17b, 21a und 16b zu dem nicht dargestellten Spülbehälter des Geschirrspülers geleitet. In diesem Betriebszustand ist die an den Ausgangsstutzen 15c angeschlossene Zuleitung 29 für den Salzbehälter 12 gesperrt.

Im Betriebszustand "Regenerieren" wird der Magnet 22 aktiviert und nimmt die in Fig. 3b gezeichnete Stellung ein, in der der Zugang zum Salzbehälter 12 über die Zuleitung 29 geöffnet ist. Dabei fließt aus einer Dosierkammer 30 (Pfeil 30a) je nach Einstellung mehr oder weniger Wasser in den Salzbehälter 12, von dort weiter als Sole über die obere Soleleitung 11 mit einem integrierten Rückschlagventil 31 in den Ionentauscher 10. Gemäß Fig. 2 kann das Rückschlagventil 31 mit einem Soleüberlauf versehen sein. In diesem Betriebszustand ist die obere Ableitung 28 durch den Ventilkolben 19 entsprechend 17b, 16b gesperrt, und die Salzsole 12a durchströmt den Ionentauscher 10 von oben nach unten. Das verdrängte Wasser aus dem Ionentauscher 10 wird über das Mehrwegeventil 13 entsprechend dem Durchgang 17a, 20, 16b über den Stutzen 14b in den Spülbehälter des Geschirrspülers geleitet. Nach Beendigung des Regeneriervorganges wird das Mehrwegeventil 13 wieder abgeschaltet, und der nächste Enthärtungsvorgang kann erfolgen.

Fig. 4a zeigt schematisch einen Ionentauscher bei einem herkömmlichen Verfahren der Regeneration im Gleichstromverfahren. Hierbei erfolgt die Durchströmung des im Harzbehälter 10 angeordneten Harzes von unten nach oben, und zwar sowohl beim Enthärten als auch beim Regenerieren. Mit 32 ist die Salzsole im Harz und mit 33 ist die Verteilung der Natriumionen durch Diffusion bezeichnet. Fig. 4b zeigt die Regeneration gemäß der Erfindung im Gegenstromverfahren. Hierbei erfolgt die Durchströmung des Harzes durch die Salzsole 12a von oben nach unten, d.h. im Gegenstrom zum Hartwasserdurchfluß 24. Mit 32 ist hier wieder die Salzsole im Harz bezeichnet und mit 33 die Natriumionenkonzentration, die durch Diffusion und Schwerkraft besser und schneller ausgeglichen wurde.

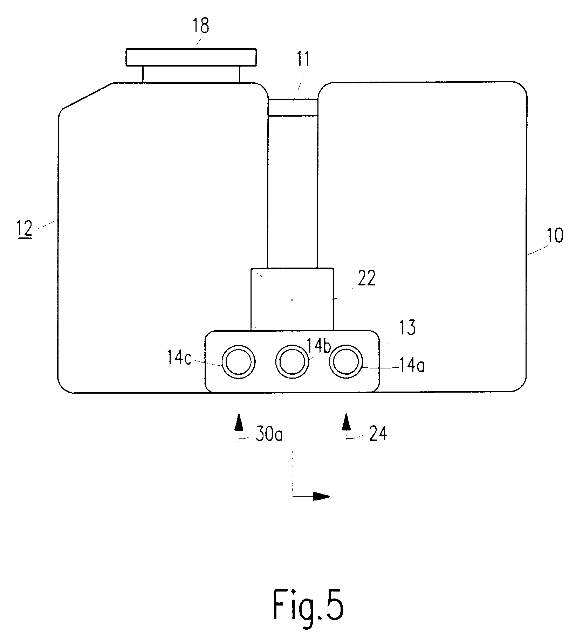

Fig. 5 zeigt schematisch eine Wasserenthärtungseinrichtung als Monoblock, bestehend aus einem Salzbehälter 12, einem Harzbehälter 10, einem Mehrwegeventil 13 und einem Elektromagnet 22, wobei alle Bauteile als eine Baueinheit ausgebildet sind.

## Patentansprüche

1. Verfahren zur Enthärtung von Frischwasser (24), insbesondere für Geschirrspülmaschinen, wobei eine aus einem Salzbehälter (12) entnommene Salzlösung (12a) wahrend des Regeneriervorganges einen mit Harz gefüllten, im Normalbetrieb vom Frischwasser (24) durchflossenen Harzbehälter (10) durchströmt und danach in einen Spülbehälter geleitet wird, dadurch gekennzeichnet, daß die Salzlösung (12a) den Harzbehälter (10) im Gegenstrom zum Frischwasser (24) durchströmt.

2. Verfahren nach Anspruch 1, dadurch gekennzeichnet, daß bei einer senkrechten Anordnung des Harzbehälters (10) das Frischwasser (24) im Normalbetrieb den Harzbehälter (10) von unten nach oben und die Salzlösung (12a) den Harzbehälter (10) im Regenerierbetrieb von oben nach unten durchströmt.

3. Einrichtung zur Durchführung eines Verfahrens nach einem der Ansprüche 1 oder 2, mit einem Harzbehälter (10), der über eine erste Zuleitung (27) mit einem Frischwasseranschluß (23) und über eine Ableitung (28) mit einem Spülbehälter verbindbar ist, und mit einem Salzbehälter (12), der über eine Soleleitung (11) mit dem Harzbehälter (10) verbunden ist und über eine zweite Zuleitung (29) mit einer Dosierkammer (30) für Frischwasser verbindbar ist, dadurch gekennzeichnet, daß die Zuleitung (27) für den Harzbehälter (10) im unteren Endbereich und die Ableitung (28) und Soleleitung (11) im oberen Endbereich des Harzbehälters angeordnet sind und daß der Anschluß der Zu- und Ableitungen (29, 27, 28) des Salz- und Harzbehälters (12, 10) derart über ein Mehrwegevenil (13) erfolgt,
- daß im Betriebszustand "Enthärten" die Zuleitung (29) des Salzbehälters (12) gesperrt ist und das Frischwasser (24) den Harzbehälter (10) von unten nach oben durchströmt und
- daß im Betriebszustand "Regenerieren" die Zuleitung (29) des Salzbehälters (12) geöffnet ist und die aus der Soleleitung (11) fließende Sole (12a) den Harzbehälter (10) von oben nach unten durchströmt.

4. Einrichtung nach Anspruch 3, dadurch gekennzeichnet, daß das Mehrwegeventil (13) drei jeweils mit Bohrungen (16, 17) versehene Eingangs- und Ausgangsstutzen (14, 15) zum Anschluß der Betriebleitungen aufweist und daß ein mit zwei Radialbohrungen (21a, b) und mit einer Schrägbohrung (20) versehener Ventilkolben (19) vorgesehen ist, der je nach seiner Stellung verschiedene Betriebswege öffnet oder schließt.

5. Einrichtung nach Anspruch 3 oder 4, dadurch gekennzeichnet,
a) daß der erste Eingangsstutzen (14a) des Mehrwegeventils (13) mit dem Frischwasserzulauf (23, 24) und der gegenüberliegende Ausgangsstutzen (15a) mit der Zuleitung (27) des Harzbehälters (10) verbunden ist,
b) daß der zweite Eingangsstutzen (14b) mit dem Spülbehälter und der gegenüberliegende Ausgangsstutzen (15b) mit der Ableitung (28) des Harzbehälters (10) verbunden ist und
c) daß der dritte Eingangsstutzen (14c) mit einem Vorratsbehälter (30) für Frischwasser (30a) und der gegenüberliegende Ausgangsstutzen (15c) mit der Zuleitung (29) des Salzbehälters (12) verbunden ist.

6. Einrichtung nach Anspruch 3, 4 oder 5, dadurch gekennzeichnet,
a) daß in der Betriebsstellung "Enthärten"
- die Bohrungen (16a, 17a) der ersten Ein- und Ausgangsstutzen (14, 15a) durch die Schrägbohrung (20) des Ventilkolbens (19) verbunden sind,
- die Bohrungen (16b, 17b) der zweiten Ein- und Ausgangsstutzen (14b, 15b) durch eine Radialbohrung (21a) des Ventilkolbens (19) verbunden sind,
- die Bohrungen (16c, 17c) der dritten Ein- und Ausgangsstutzen (14c, 15c) durch den Ventilkolben (19) verschlossen sind, und
b) daß in der Betriebsstellung "Regenerieren"
- die Bohrungen (16a, 17b) des ersten Eingangsstutzen (14a) und des zweiten Ausgangsstutzens (15b) durch den Ventilkolben (19) gesperrt sind,
- die Bohrungen (16b, 17a) des zweiten Eingangsstutzens (14b) und ersten Ausgangsstutzens (15a) durch die Schrägbohrung (20) des Ventilkolbens (19) verbunden sind und
- die Bohrungen (16c, 17c) des dritten Eingangs- und Ausgangsstutzens (14c, 15c) durch eine Radialbohrung (21b) verbunden sind.

7. Einrichtung nach einem der Ansprüche 3 bis 6, dadurch gekennzeichnet, daß der Salzbehälter (12), der Ionentauscher (10) und das Mehrwegeventil (13) mit dem Magneten (22) als einteiliger Monoblock ausgebildet sind.
